# EUROPEAN PATENT SPECIFICATION

(11) **EP 3 009 365 B1**
(45) Date of publication and mention of the grant of the patent: **01.11.2017**
(21) Application number: 14810841.8
(22) Date of filing: 08.05.2014
(51) Int. Cl.: B65D 1/02

(54) **LAMINATED BOTTLE**
LAMINIERTE FLASCHE
BOUTEILLE STRATIFIÉE

(30) Priority: 12.06.2013 JP 2013124134
(43) Date of publication of application: 20.04.2016
(73) Proprietor: Yoshino Kogyosho Co., Ltd., Tokyo 136-8531 (JP)
(72) Inventor: TAKADA, Makoto, Matsudo-shi Chiba 270-2297 (JP)
(74) Representative: HGF Limited
(86) International application number: PCT/JP2014/002449
(87) International publication number: WO 2014/199555

(56) References cited:
- JP-A- H05 309 648
- JP-A- 2001 088 817
- JP-A- 2009 269 615
- JP-A- 2009 269 615
- JP-A- 2010 012 605

## Description

### TECHNICAL FIELD

The present disclosure relates to a laminated bottle having high gas barrier properties and oxygen absorptive properties and to a technology of preventing delamination of gas barrier resin layer.

### BACKGROUND

Bottles serving to maintain quality of a content medium are known in which inner and outer layers are made of a polyester resin or the like and in which the gas barrier resin layer is interposed between the inner and outer layers. For example, when the content medium is prone to oxidization, such a bottle provides oxygen permeation prevention properties and oxygen absorptive properties, and when the content medium is a carbonated drink, the bottle prevents permeation of carbon dioxide gas. (Refer to Patent Literature 1, for example.) Patent Literature 2 discloses a laminated bottle, according to the preamble of claim 1, with a gas barrier resin layer arranged between polyester resin layers.

### CITATION LIST

### Patent Literature

PTL 1: JPH0659681B
PTL 2: JP2009269615A

### SUMMARY

### (Technical Problem)

However, the inner and outer layers made of polyester resin layers might cause layer delamination between these layers and the gas barrier resin layer, which generally adopts an ethylene-vinyl alcohol copolymer (EVOH) and a nylon resin (polyamide). Progress of the layer delamination causes a problem of poor appearance of the bottle as a container, and the product value is decreased.

The present disclosure has been conceived in awareness of the above fact, and the present disclosure is to provide a laminated bottle that is capable of providing the function of the gas barrier resin layer and is also capable of preventing, even in the event of layer delamination between the inner and outer layers and the gas barrier resin layer, progress of the layer delamination.

### (Solution to Problem)

The present disclosure provides a laminated bottle including an inner layer, an outer layer, and gas barrier resin layers arranged between the inner layer and the outer layer, wherein the bas barrier resin layers are arranged at an interval from each other via intermittent portions each extending in the form of a ribbon in a manner such that the inner layer and the outer layer are contiguous with each other in a thickness direction thereof in the intermittent portion, and a width of the intermittent portion in a largest-width region thereof is 1.5 mm or more.

In one of preferred embodiments, the width of the intermittent portion in the largest-width region thereof is in the range of 1.5 mm to 5 mm.

In another one of preferred embodiments, the gas barrier resin layers include a plurality of strip-shaped bodies extending along a bottle axis.

In yet another one of preferred embodiments, the gas barrier resin layers include a plurality of annular bodies extending about a bottle axis.

In yet another one of preferred embodiments, the gas barrier resin layers include a plurality of four-sided bodies each including two sides extending along a bottle axis and other two sides extending about the bottle axis.

In yet another one of preferred embodiments, the inner layer and the outer layer are made of a polyester resin, and the gas barrier resin layers are arranged at least in a shoulder and a trunk of the laminated bottle.

Examples of resin used to form the inner and outer layers of the bottle include a polyethylene resin, such as a polyethylene terephthalate (PET) resin and a polyethylene naphthalate (PEN) resin, and a polyolefin resin, such as a polyethylene (PE) resin and a polypropylene (PP) resin. Examples of the gas barrier resin include an ethylene-vinyl alcohol copolymer (EVOH), a m-xylylene group-containing polyamide resin, and a nylon resin (polyamide).

These resins may be used alone or in a mixture with other resins.

### (Advantageous Effect)

According to the present disclosure, since the inner and outer layers of the bottle are connected in the intermittent portions, which are arranged between adjacent barrier resin layers, outer circumferential edges of the gas barrier resin layers are constrained.

The above structure prevents layer delamination between the inner and outer layers and the gas barrier resin layers included in the bottle. Even in the event of layer delamination, setting the width of the intermittent portion in the largest-width portion thereof to be 1.5 mm or more further ensures that the outer circumferential edges of the gas barrier resin layers may be constrained, and progress of delamination is prevented effectively.

Thus, the present disclosure provides a novel laminated bottle having an excellent appearance shape.

When the width of the intermittent portion in the largest-width region thereof is set to be in the range of 1.5 mm to 5 mm, progress of delamination is prevented effectively, and the function of the gas barrier resin layer is provided satisfactorily.

When the gas barrier resin layers include the plurality of strip-shaped bodies extending along the bottle axis and arranged at an interval from each other about the bottle axis in accordance with the present disclosure, the gas barrier resin layers are substantially separated in a circumferential direction about the bottle axis by the intermittent portions extending along the bottle axis.

That is to say, a surface area of each strip-shaped body occupies a small proportion of a surface area of the bottle, and even in the event of layer delamination, the delaminated area is minimized. Accordingly, deterioration in physical properties and poor appearance caused by the delamination are prevented effectively.

On the other hand, when the gas barrier resin layers include the plurality of annular bodies extending about the bottle axis and arranged at an interval from each other along the bottle axis the in accordance with the present disclosure, the gas barrier resin layers are substantially separated in a direction of the bottle axis by the intermittent portions extending about the bottle axis.

That is to say, in this case also, a surface area of each annular body occupies a small proportion of the surface area of the bottle, and even in the event of layer delamination, the delaminated area is minimized.

Furthermore, when the gas barrier resin layers include the plurality of four-sided bodies each including two sides extending along the bottle axis and other two sides extending about the bottle axis and arranged at an interval from each other along and about the bottle axis in accordance with the present disclosure, the gas barrier resin layers are substantially separated in grid-like fashion by the intermittent portions extending along the bottle axis and the intermittent portions extending about the bottle axis.

That is to say, in this case also, a surface area of each four-sided body occupies a small proportion of the surface area of the bottle, and even in the event of layer delamination, the delaminated area is minimized.

### BRIEF DESCRIPTION OF THE DRAWINGS

In the accompanying drawings:
FIG. 1A is a side view of a laminated bottle according to the first embodiment of the present disclosure, and FIG. 1B is a sectional view taken along a line A-A of FIG. 1A;
FIG. 2A is a side view of a laminated bottle according to the second embodiment of the present disclosure, and FIG. 2B is a sectional view taken along a line B-B of FIG. 2A;
FIG. 3 is a side view of a laminated bottle according to the third embodiment of the present disclosure; and
FIG. 4 is a graph illustrating, for varying width of the intermittent portion, progress of delamination of layers included in the laminated bottle of the first embodiment over time.

### DETAILED DESCRIPTION

The following describes a laminated bottle according to preferred embodiments of the present disclosure in detail with reference to the drawings.

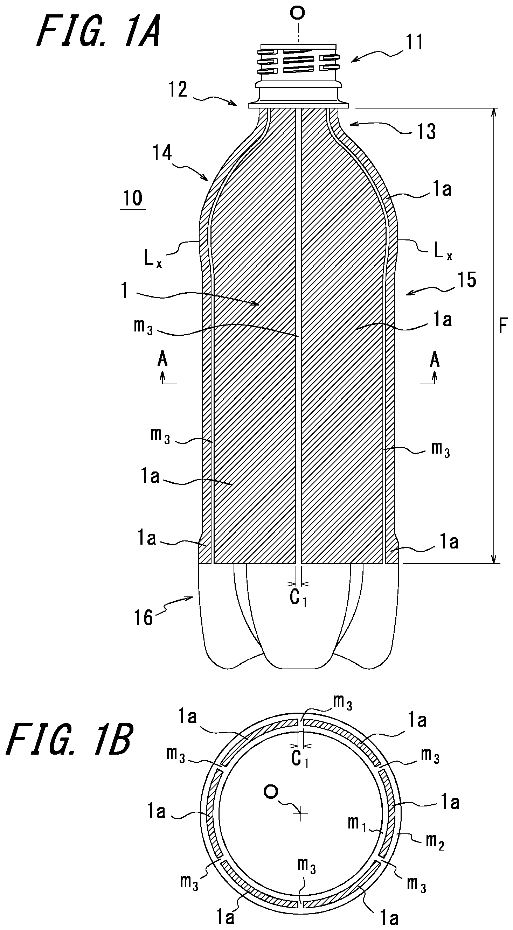

FIG. 1A is a side view of a laminated bottle 10 according to the first embodiment of the present disclosure, and FIG. 1B is a sectional view taken along a line A-A of FIG. 1A.

The laminated bottle (hereinafter, called "the bottle") 10 includes a mouth 11 to which a cap, which is not illustrated, is screwed detachably. The laminated bottle 10 also includes a tubular neck 13 that is connected to the mouth 11 through an annular portion 12 disposed in a lower end of the mouth and that has a diameter substantially the same as a diameter of the mouth 11, a shoulder that is connected to the neck 13 and that has a gradually increasing diameter, a trunk 15 that is connected to the shoulder 14 and whose diameter is in part reduced and then increased again, and a bottom 16 that is connected to the trunk 15 and that has a petaloid shape.

The bottle 10 is mainly made of PET resin and includes a gas barrier resin layer 1 provided within a thickness of the bottle 10. Accordingly, the bottle 10 defines an inner layer m₁ located on an inner side of the bottle than the gas barrier resin layer 1 and an outer layer m₂ located on an outer side of the bottle than the gas barrier resin layer 1.

As indicated with slanted lines in FIG. 1, a field F of the gas barrier resin layer 1 that extends from a border between the annular portion 12 and the neck 13 to a border between the trunk 15 and the bottom 16 includes a plurality of strip-shaped bodies 1a extending along a bottle axis O. In more detail, as illustrated in FIG. 1, the strip-shaped bodies 1a extend in the form of strips along a ridgeline (an outline that is present on the left and right in FIG. 1 to define an external shape of the bottle in FIG. 1) Lx defining an appearance shape of the bottle 10 as viewed from a side (lateral surface) thereof. The field F is not limited to the example of the present embodiment and may be determined appropriately. For example, the field F may extend beyond the annular portion 12 to reach the mouth 11 or may extend beyond the border between the trunk 15 and the bottom 16 to reach the bottom 16. Alternatively, the field F may extend beyond a region of the bottom 16 in which the bottom 16 contacts the ground, toward an inner side of the bottom 16 in the radial direction.

As illustrated in FIG. 1B, the gas barrier resin layer 1 of the present embodiment includes six pieces of strip-shaped bodies 1a arranged at an interval from each other about the bottle axis O to constitute the gas barrier resin layer 1. With the above structure, as illustrated in FIG. 1B, the inner layer m₁ and the outer layer m₂ are integrally connected by intermittent portions m₃ made of PET resin and extending in parallel along the ridgeline Lx as illustrated in FIG. 1A. That is to say, the strip-shaped bodies 1a are arranged at an interval from each other via the intermittent portions m₃ in the field F of the bottle 10. Herein, a width C₁ of each intermittent portion m₃ may vary along the bottle axis O, and the width C₁ of the intermittent portion m₃ in a largest-width region thereof is 1.5 mm or more.

According to the present embodiment, each strip-shaped body 1a occupies a small proportion of a surface area of the PET resin bottle 10, and moreover, outer circumferential edges of each strip-shaped body 1a are constrained by the corresponding intermittent portions m₃ extending continuously between the adjacent strip-shaped bodies.

The above structure prevents layer delamination between the inner layer m₁ and the gas barrier resin layer 1 (strip-shaped bodies 1a) or between the outer layer m₂ and the gas barrier resin layer 1 (strip-shaped bodies 1a). Even in the event of delamination, since each strip-shaped body 1a occupies a small proportion of the surface area of the bottle 10, the problem of poor appearance is prevented effectively.

Furthermore, by setting the width C₁ of each intermittent portion m₃ in the largest-width region thereof to be 1.5 mm or more, it is further ensured that the outer circumferential edges of the strip-shaped body 1a may be constrained by the large-width region of the intermittent portion m₃. Accordingly, even in the event of delamination occurring, for example, from a small-width region of any intermittent portion C₁, progress of the delamination is prevented by the large-width region of the intermittent portion m₃.

Thus, the present embodiment prevents layer lamination of the inner / outer layer and the gas barrier resin layer 1 included in the bottle 10 and moreover, even in the event of layer lamination, prevents progress of delamination effectively. Accordingly, a novel laminated bottle having an excellent appearance shape is provided. Additionally, to prevent progress of delamination even more effectively, the width C₁ of each intermittent portion m₃ is preferably set to be an average of 1 mm or more. Furthermore, a length of the small-width region of the intermittent portion m₃ in which the width C₁ is continuously less than 1.5 mm is preferably shorter than a length of the large-width region of the intermittent portion m₃ in which the width C₁ is 1.5 mm or more and which is contiguous with the small-width region. Moreover, the width C₁ of the intermittent portion m₃ even in the smallest-width region is more preferably set to be 1.5 mm or more.

When the width C₁ of each intermittent portion m₃ in the largest-width region thereof is set to be in the range of 1.5 mm to 5 mm, the outer circumferential edges of each strip-shaped body 1a are constrained by the corresponding intermittent portions m₃ while the width of the strip-shaped body is secured. Accordingly, progress of delamination is prevented effectively, and the function of the gas barrier resin layer 1 to prevent permeation of oxygen and carbon dioxide gas is provided satisfactorily.

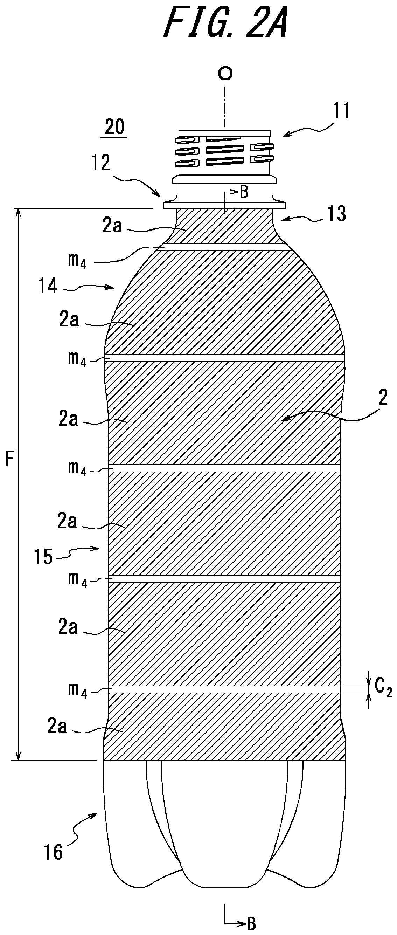

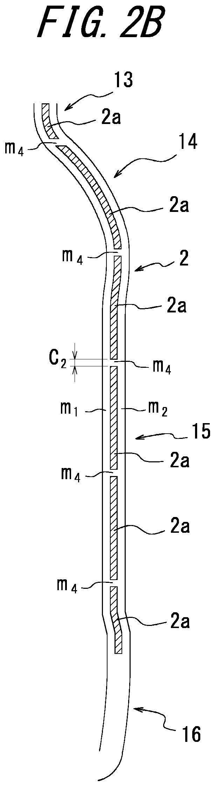

FIG. 2A is a side view of a bottle 20 according to the second embodiment of the present disclosure, and FIG. 2B is a sectional view taken along a line B-B of FIG. 2A. In the description below, features substantially the same as those of the first embodiment are denoted by the same reference numerals, and a description thereof is omitted.

As indicated with slanted lines in FIG. 2, a gas barrier resin layer 2 includes a plurality of annular bodies 2a extending about the bottle axis O. The annular body 2a is formed in an endless shape by using a gas barrier resin.

As illustrated in FIG. 2A, the gas barrier resin layer 2 of the present embodiment includes six pieces of annular bodies 2a arranged at an interval from each other along the bottle axis O to constitute the gas barrier resin layer 2. With the above structure, as illustrated in FIG. 2B, the inner layer m₁ and the outer layer m₂ are integrally connected by intermittent portions m₄ made of a PET resin and extending in parallel about the bottle axis O. That is to say, the annular bodies 2a are arranged at an interval from each other via the intermittent portions m₄ in the field F of the bottle 20. Herein, a width C₂ of each intermittent portion m₄ may vary about the bottle axis O, and the width C₂ of the intermittent portion m₄ in a largest-width region thereof is 1.5 mm or more.

According to the present embodiment also, each annular body 2a occupies a small proportion of a surface area of the PET resin bottle 20, and moreover, outer circumferential edges of the pieces of the gas barrier resin layer 2 are constrained by the corresponding intermittent portions m₄ extending continuously between the adjacent pieces of the gas barrier resin layer 2.

The above structure prevents layer delamination between the inner layer m₁ and the gas barrier resin layer 2 (annular bodies 2a) or between the outer layer m₂ and the gas barrier resin layer 2 (annular bodies 2a). Even in the event of delamination, since each annular body 2a occupies a small proportion of the surface area of the bottle 20, the problem of poor appearance is prevented effectively.

Furthermore, by setting the width C₂ of each intermittent portion m₄ in the largest-width region thereof to be 1.5 mm or more, it is further ensured that the outer circumferential edges of the annular body 2a may be constrained by the large-width region of the intermittent portion m₃. Additionally, in the present embodiment also, the width C₂ of each intermittent portion m₄ is preferably set to be an average of 1 mm or more. Furthermore, a length of the small-width region of the intermittent portion m₄ in which the width C₂ is continuously less than 1.5 mm is preferably shorter than a length of the large-width region of the intermittent portion m₄ in which the width C₂ is 1.5 mm or more and which is contiguous with the small-width region. Moreover, the width C₂ of the intermittent portion m₄ even in the smallest-width region is more preferably set to be 1.5 mm or more.

In the present embodiment also, when the width C₂ of each intermittent portion m₄ in the largest-width region thereof is set to be in the range of 1.5 mm to 5 mm, progress of delamination is prevented even more effectively, and the function of the gas barrier resin layer 1 to prevent permeation of oxygen and carbon dioxide gas is provided satisfactorily.

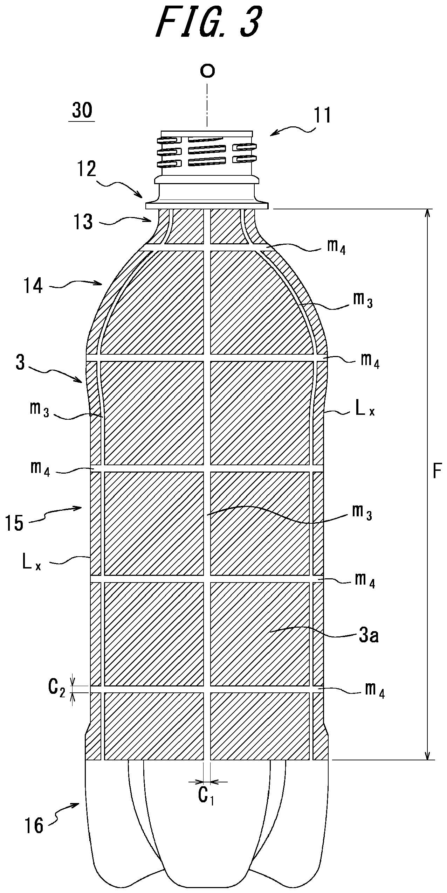

FIG. 3 illustrates a bottle 30 according to the third embodiment of the present disclosure. In the description below, features substantially the same as those of the first embodiment are denoted by the same reference numerals, and a description thereof is omitted.

The present embodiment combines the first and second embodiments.

A gas barrier resin layer 3 includes a plurality of four-sided bodies 3a each including two sides extending along the bottle axis O and other two sides extending about the bottle axis O.

As illustrated in FIG. 3, the gas barrier resin layer 3 includes 36 (= 6 x 6) pieces of four-sided bodies 3a arranged at an interval along the bottle axis O and about the bottle axis O to constitute the gas barrier resin layer 3. With the above structure, as illustrated in FIG. 3, the inner layer m₁ and the outer layer m₂ are integrally connected by intermittent portions m₃ and m₄ in grid-like fashion. That is to say, the four-sided bodies 3a are arranged at an interval from each other via the intermittent portions m₃ and m₄ in the field F of the bottle 30.

In the present embodiment also, by setting the width C₁ of each intermittent portion m₃ and the width C₂ of each intermittent portion m₄ similarly to the first and second embodiments, progress of delamination is prevented effectively, and the function of the gas barrier resin layer 3 is provided satisfactorily.

In the above embodiments, the gas barrier resin layers 1 to 3 are arranged solely in the field F to reduce the amount of gas barrier resin to be used, which is a cause of cost overrun. The present inventor has focused on the fact that there is a small need for a gas barrier resin layer to be arranged in the bottom 16 of the bottle that generally has a large thickness. However, this structure does not deny that the gas barrier resin layers 1 to 3 may be arranged over the entire bottle, nor does it deny that the gas barrier resin layers 1 to 3 may be arranged in the trunk 15 alone or in the shoulder 14 and the trunk 15. Furthermore, the gas barrier resin layers 1 to 3 may be extended beyond the aforementioned field F, for example, to reach the mouth 11 or reach the bottom 16. Moreover, the gas barrier resin layers 1 to 3 may extend beyond the region of the bottom 16 in which the bottom 16 contacts the ground, toward the inner side of the bottom 16 in the radial direction.

According to the present disclosure, arrangement, positions, and the number of the strip-shaped bodies 1a, the annular bodies 2a, and the four-sided bodies 3a are not limited to the embodiments described above. The strip-shaped bodies 1a, the annular bodies 2a, and the four-sided bodies 3a may also be arranged at an irregular interval and may be arranged optimally in accordance with the shape of the bottle. Furthermore, the intermittent portions m₃ and m₄ may be arranged obliquely, and the four-sided bodies 3a may each be formed, for example, in a substantially circular, an elliptical, a leaf, and a triangular shape. Moreover, although the bottle of the present disclosure may be molded by injection blow molding, extrusion blow molding, or the like, it is possible to adopt any other molding methods.

Although in the above embodiments the border between the trunk 15 and the bottom 16 of the bottle is defined to start from a region of the bottle where the petaloid shape starts to appear, this definition may be changed as long as the aforementioned idea focused on in conceiving arrangement of the gas barrier resin layers is retained. For example, the bottom 16 may also be defined to start from a region of the bottle in which the thickness of the bottle starts to be increased relative to the trunk 15.

The descriptions above are considered to be merely illustrative of preferred embodiments of the present disclosure, and various changes may be made within the scope of the claims. For example, various structures adopted in the above embodiments may be combined as appropriate in accordance with various purposes and applications.

### EXAMPLES

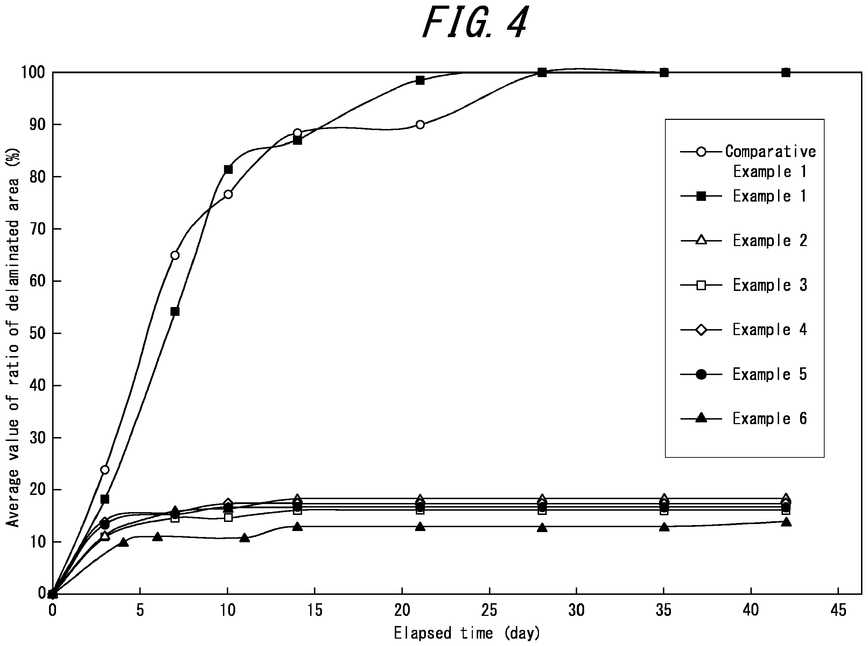

A study on progress of delamination of layers and permeation of carbon dioxide gas through bottles was conducted on the bottles prepared by varying the number of the strip-shaped bodies, the width of each intermittent portion, or the like of the bottle of FIG. 1 as follows. Results of the study, together with specifications of the bottles, are shown in Table 1 and FIG. 4 as for progress of delamination of the layers, and in Table 2 as for permeation of carbon dioxide gas through the bottles.

**[Table 1]**

| Ratio of delaminated area [%] | | | | | | | | | | | |
|---|---|---|---|---|---|---|---|---|---|---|---|
| | Width of intermittent portion (in largest-width region) [mm] | Width of gas barrier resin layer [mm] | Sample | Elapsed time [day] | | | | | | | |
| | | | | 3 | 7 | 10 | 14 | 21 | 28 | 35 | 42 |
| (Comparative Example 1 | Intermittent portion not present (in gas barrier resin layer in endless shape) | Whole circumference of bottle | No. 1 | 30 | 70 | 90 | 100 | 100 | 100 | 100 | |
| | | | No. 2 | - | - | - | - | - | - | - | |
| | | | No. 3 | 30 | 70 | 90 | 100 | 100 | 100 | 100 | |
| | | | No. 4 | - | - | - | - | - | - | - | |
| | | | No. 5 | 10 | 100 | 100 | 100 | 100 | 100 | 100 | |
| | | | No. 6 | - | - | - | - | 30 | 100 | 100 | |
| | | | No. 7 | - | 10 | 10 | 30 | 100 | 100 | 100 | |
| | | | No. 8 | - | - | - | - | - | - | - | |
| | | | No. 9 | 30 | 70 | 90 | 100 | 100 | 100 | 100 | |
| | | | No. 10 | 20 | 70 | 90 | 100 | 100 | 100 | 100 | |
| | | | Average | 24 | 65 | 78 | 88 | 90 | 100 | 100 | |
| Example 1 | 1 | 26 | No. 1 | 20 | 50 | 80 | 90 | 100 | 100 | 100 | 100 |
| | | | No. 2 | 30 | 60 | 90 | 90 | 100 | 100 | 100 | 100 |
| | | | No. 3 | 5 | 60 | 90 | 90 | 100 | 100 | 100 | 100 |
| | | | No. 4 | - | 50 | 80 | 80 | 100 | 100 | 100 | 100 |
| | | | No. 5 | 20 | 70 | 90 | 90 | 100 | 100 | 100 | 100 |
| | | | No. | - | - | - | - | - | - | - | - |
| | | | No. 7 | 5 | 20 | 50 | 80 | 90 | 100 | 100 | 100 |
| | | | No. 8 | - | - | - | - | - | - | - | - |
| | | | No. 9 | - | - | - | - | - | - | - | - |
| | | | No. 10 | 30 | 70 | 90 | 90 | 100 | 100 | 100 | 100 |
| | | | Average | 18 | 54 | 81 | 87 | 99 | 100 | 100 | 100 |
| Example 2 | 1.5 | 25.5 | No. 1 | 8 | 11 | 11 | 11 | 11 | 11 | 11 | 11 |
| | | | No. 2 | 8 | 12 | 12 | 23 | 23 | 23 | 23 | 23 |
| | | | No. 3 | 7 | 15 | 20 | 23 | 23 | 23 | 23 | 23 |
| | | | No. 4 | 5 | 11 | 11 | 11 | 11 | 11 | 11 | 11 |
| | | | No. 5 | 17 | 22 | 22 | 22 | 22 | 22 | 22 | 22 |
| | | | No. 6 | 19 | 23 | 23 | 23 | 23 | 23 | 23 | 23 |
| | | | No. 7 | 8 | 11 | 11 | 12 | 12 | 12 | 12 | 12 |
| | | | No. 8 | 18 | 22 | 22 | 22 | 22 | 22 | 22 | 22 |
| | | | No. 9 | - | - | - | - | - | - | - | - |
| | | | No. 10 | - | - | - | - | - | - | - | - |
| | | | Average | 11 | 16 | 16 | 18 | 18 | 18 | 18 | 18 |
| Example 3 | 2.0 | 25 | 1 | 16 | 22 | 22 | 22 | 22 | 22 | 22 | 22 |
| | | | 2 | - | - | - | - | - | - | - | - |
| | | | 3 | 7 | 10 | 10 | 10 | 10 | 10 | 10 | 10 |
| | | | 4 | 12 | 12 | 12 | 12 | 12 | 12 | 12 | 12 |
| | | | 5 | 7 | 10 | 10 | 19 | 19 | 19 | 19 | 19 |
| | | | 6 | 6 | 9 | 9 | 10 | 10 | 10 | 10 | 10 |
| | | | 7 | - | - | - | - | - | - | - | - |
| | | | 8 | 14 | 21 | 21 | 21 | 21 | 21 | 21 | 21 |
| | | | 9 | 13 | 13 | 13 | 13 | 13 | 13 | 13 | 13 |
| | | | 10 | 13 | 20 | 20 | 22 | 22 | 22 | 22 | 22 |
| | | | Average | 11 | 15 | 15 | 16 | 16 | 16 | 16 | 16 |
| Example 4 | 2.5 | 24.5 | No. 1 | 20 | 20 | 20 | 20 | 20 | 20 | 20 | 20 |
| | | | No. 2 | 10 | 10 | 10 | 10 | 10 | 10 | 10 | 10 |
| | | | No. 3 | 5 | 5 | 5 | 5 | 5 | 5 | 5 | 5 |
| | | | No. 4 | 10 | 20 | 20 | 20 | 20 | 20 | 20 | 20 |
| | | | No. 5 | 10 | 10 | 30 | 30 | 30 | 30 | 30 | 30 |
| | | | No. 6 | 20 | 20 | 20 | 20 | 20 | 20 | 20 | 20 |
| | | | No. 7 | 20 | 20 | 20 | 20 | 20 | 20 | 20 | 20 |
| | | | No. 8 | 10 | 10 | 10 | 10 | 10 | 10 | 10 | 10 |
| | | | No. 9 | 20 | 20 | 20 | 20 | 20 | 20 | 20 | 20 |
| | | | No. 10 | 15 | 20 | 20 | 20 | 20 | 20 | 20 | 20 |
| | | | Average | 14 | 16 | 18 | 18 | 18 | 18 | 18 | 18 |
| Example 5 | 5 | 22 | No. 1 | 20 | 20 | 20 | 20 | 20 | 20 | 20 | 20 |
| | | | No. 2 | 10 | 10 | 10 | 10 | 10 | 10 | 10 | 10 |
| | | | No. 3 | 10 | 10 | 20 | 20 | 20 | 20 | 20 | 20 |
| | | | No. 4 | 15 | 20 | 20 | 20 | 20 | 20 | 20 | 20 |
| | | | No. 5 | 15 | 20 | 20 | 20 | 20 | 20 | 20 | 20 |
| | | | No. 6 | - | 20 | 20 | 20 | 20 | 20 | 20 | 20 |
| | | | No. 7 | - | 10 | 10 | 10 | 10 | 10 | 10 | 10 |
| | | | No. 8 | 10 | 10 | 10 | 10 | 10 | 10 | 10 | 10 |
| | | | No. 9 | - | - | - | - | - | - | - | - |
| | | | No. 10 | 15 | 20 | 20 | 20 | 20 | 20 | 20 | 20 |
| | | | Average | 14 | 16 | 17 | 17 | 17 | 17 | 17 | 17 |

| | | | | Elapsed time [day] | | | | | | | |
|---|---|---|---|---|---|---|---|---|---|---|---|
| | | | | 4 | 6 | 11 | 14 | 21 | 28 | 35 | 42 |
| Example 6 | 8 | 19 | No. 1 | - | - | 0 | - | - | - | - | - |
| | | | No. 2 | 10 | 10 | 10 | 10 | 10 | 10 | 10 | 10 |
| | | | No. 3 | 15 | 20 | 20 | 20 | 20 | 20 | 20 | 20 |
| | | | No. 4 | 10 | 10 | 20 | 20 | 20 | 20 | 20 | 20 |
| | | | No. 5 | 10 | 10 | 10 | 10 | 10 | 10 | 10 | 10 |
| | | | No. 6 | - | - | - | - | - | - | - | - |
| | | | No. 7 | 5 | 5 | 5 | 5 | 5 | 5 | 5 | 10 |
| | | | No. 8 | - | - | - | - | - | - | - | - |
| | | | No. 9 | - | - | - | - | - | - | - | - |
| | | | No. 10 | - | - | - | - | - | - | - | - |
| | | | Average | 10 | 11 | 11 | 13 | 13 | 13 | 13 | 14 |

**[Table 2]**

| | Bottle weight [g] | Barrier resin layer | Width of intermittent portion [mm] | Number of intermittent portions [pieces] | Gas loss of entire bottle [%] | Barrier properties improvement factor relative to Comparative Example 2 | Barrier properties improvement factor relative to Comparative Example 3 | Barrier properties improvement factor relative to Comparative Example 4 |
|---|---|---|---|---|---|---|---|---|
| Comparative Example 2 (Reference) | 31 | Absent | N/A | N/A | 17.4 | - | - | - |
| Comparative Example 3 | 24 | Absent | N/A | N/A | 21.9 | 0.79 | - | - |
| Comparative Example 4 | 24 | Present | N/A | N/A | 9.9 | 1.76 | 2.21 | - |
| Example 7 | 24 | Present | 2 | 6 | 10.7 | 1.63 | 2.05 | 0.92 |
| Example 8 | 24 | Present | 2 | 8 | 11.0 | 1.59 | 2.00 | 0.90 |
| Example 9 | 24 | Present | 2 | 12 | 11.5 | 1.51 | 1.90 | 0.86 |
| Example 10 | 24 | Present | 3 | 6 | 11.1 | 1.57 | 1.97 | 0.89 |
| Example 11 | 24 | Present | 3 | 8 | 11.5 | 1.51 | 1.90 | 0.86 |
| Example 12 | 24 | Present | 3 | 12 | 12.3 | 1.41 | 1.78 | 0.80 |
| Example 13 | 24 | Present | 5 | 6 | 11.9 | 1.46 | 1.84 | 0.83 |
| Example 14 | 24 | Present | 5 | 8 | 12.6 | 1.38 | 1.74 | 0.79 |
| Example 15 | 24 | Present | 5 | 12 | 13.9 | 1.25 | 1.57 | 0.71 |
| Example 16 | 24 | Present | 10 | 6 | 13.9 | 1.25 | 1.57 | 0.71 |
| Example 17 | 24 | Present | 10 | 8 | 15.3 | 1.14 | 1.43 | 0.65 |
| Example 18 | 24 | Present | 10 | 12 | 18.0 | 0.97 | 1.22 | 0.55 |

As for progress of delamination of layers, for each of Examples 1 to 6, ten bottles (No. 1 to No. 10) each including eight pieces of strip-shaped bodies arranged at an equal interval in accordance with FIG. 1 and having a varying width of the intermittent portion (in the largest-width region) and a varying width of the gas barrier resin layer (strip-shaped body) located in a position corresponding to the intermittent portion (in the largest-width region) as indicated in Table 1 were prepared. For Comparative Example 1, ten bottles (No. 1 to No. 10) each having the same configuration as that of FIG. 1, except for that the intermittent portions were omitted and that the gas barrier resin layer had an endless shape, were also prepared. Into each of the prepared bottles, 4.2 vol of carbonated water was filled, and the entire bottle was cooled to 5 °C. From this state, the bottle was dropped from the height of 1.8 m to a concrete surface in a horizontal direction (i.e., a direction in which the bottle axis is parallel to the concrete surface. Subsequently, the bottle was stored in the environment of 40 °C and 75 % RH, and the condition of delamination of the strip-shaped body layer 1a was studied every predetermined time period. Table 1 shows, for each bottle, a ratio of an area delaminated to an area before the delamination (i.e., ratio of delaminated area) in percentage, and Table 1 also shows, for bottles that underwent delamination, average values of the ratio of delaminated area in percentage. The bottles of Examples 1 to 6 and Comparative Example 1 each had a capacity of 500 ml and a weight of 24 g, and the inner and outer layers were made of a polyethylene terephthalate (PET) resin, the gas barrier resin layer was made of MX nylon (MXD-6 manufactured by Mitsubishi Gas Chemical Company, Inc.), and the gas barrier resin layer occupied 5 wt% of the weight of the bottle. Additionally, the symbol "-" in Table 1 indicates absence of delamination. FIG. 4 is a graph illustrating, for Examples 1 to 6 and Comparative Example 1, a relation between the elapsed time shown in Table 1 and the average value of delaminated area.

As for permeation of carbon dioxide gas through the bottles, a reference bottle (Comparative Example 2 having the same configuration as that of FIG. 1, except for that the gas barrier resin layer was omitted, and a bottle (Comparative Example 3) having the same configuration as that of FIG. 1 and having a smaller weight than Comparative Example 2, and a bottle (Comparative Example 4) having the same configuration as that of FIG. 1, except for that the intermittent portions were omitted and that the gas barrier resin layer had an endless shape, and having a smaller weight than Comparative Example 2 were prepared. Into each of the prepared bottles, carbonated water containing a predetermined carbon dioxide gas was filled, and after a predetermined time period (12 weeks, stored in a room temperature) elapsed, the amount of carbon dioxide gas remaining in the bottle was measured. The bottles of Comparative Examples 2 to 4 and Examples 7 to 18 were each made of a polyethylene terephthalate (PET) resin and had a capacity of 500 ml. The gas barrier resin layer in each of Comparative Example 4 and Examples 7 to 18 was made of MX nylon (MXD-6 manufactured by Mitsubishi Gas Chemical Company, Inc.), and the gas barrier resin layer occupied 5 wt% of the weight of the bottle. In Table 2, the item "gas loss of entire bottle" of Comparative Examples 2 to 4 indicates, in percentage, a ratio of carbon dioxide gas that permeated through the bottle to carbon dioxide gas used at the time of filling. Based on Comparative Examples 3 and 4, carbon gas permeability per unit area was calculated in a region where the gas barrier resin layer was present and in a region where the gas barrier resin layer was absent. By using this, the width and the number of the intermittent portions were varied as shown in Table 2. For each of the bottles (Examples 7 to 18) configured in accordance with FIG. 1, a "gas loss of the entire bottle" was calculated. Furthermore, a barrier properties improvement factor, relative to the reference Comparative Example 2 as a reference, was calculated. The barrier properties improvement factor (BIF) herein is defined as a ratio of the permeation amount of the gas (gas loss) calculated for the bottle to be compared, to the permeation amount of the gas (gas loss) calculated for the reference bottle.
The barrier properties improvement factor (BIF) is represented by the following formula: BIF = (permeation amount of gas calculated for reference bottle) / (permeation amount of gas calculated for bottle to be compared).

Table 1 and FIG. 4 clearly indicates that progress of delamination is prevented effectively when the width of the intermittent portion in the largest-width region thereof is 1.5 mm or more (as in Examples 2 to 6). Furthermore, Table 2 clearly indicates that improvement in barrier properties relative to the reference Comparative Example 2 is expected at least when the width of the intermittent portion is 5 mm or less (as in Examples 7 to 15).

### INDUSTRIAL APPLICABILITY

The present disclosure is not limited to applications in containers for food, such as a beverage, and may be adopted for anything requiring gas barrier properties for content mediums.

### REFERENCE SIGNS LIST

1 gas barrier resin layer
1a strip-shaped body
2 gas barrier resin layer
2a annular body
3 gas barrier resin layer
3a four-sided body
10 laminated bottle (bottle)
11 mouth
12 annular portion
13 neck
14 shoulder
15 trunk
16 bottom
20 laminated bottle (bottle)
30 laminated bottle (bottle)
C₁ width of intermittent portion
C₂ width of intermittent portion
F field extending from border between annular portion and neck to border between trunk and bottom
m₁ inner layer (polyester resin)
m₂ outer layer (polyester resin)
m₃ intermittent portion (polyester resin)
m₄ intermittent portion (polyester resin)

## Claims

1. A laminated bottle (10, 20, 30) comprising an inner layer (m₁), an outer layer (m₂), and gas barrier resin layers (1, 2, 3) arranged between the inner layer (m₁) and the outer layer (m₂), wherein
the gas barrier resin layers (1, 2, 3) are arranged at an interval from each other via intermittent portions (m₃, m₄) each extending in the form of a ribbon in a manner such that the inner layer (m₁) and the outer layer (m₂) are contiguous with each other in a thickness direction thereof in the intermittent portion (m₃, m₄), **characterized in that**:
a width of the intermittent portion (m₃, m₄) in a largest-width region thereof is 1.5 mm or more.

2. The laminated (10, 20, 30) bottle of claim 1, where the width of the intermittent portion (m₃, m₄) in the largest-width region thereof is in the range of 1.5 mm to 5 mm.

3. The laminated bottle (10, 20, 30) of claim 1 or 2, wherein the gas barrier resin layers (1, 2, 3) comprise a plurality of strip-shaped bodies (1a) extending along a bottle axis (O).

4. The laminated bottle (10, 20, 30) of claim 1 or 2, wherein the gas barrier resin layers (1, 2, 3) comprise a plurality of annular bodies (2a) extending about a bottle axis (O).

5. The laminated bottle (10, 20, 30) of claim 1 or 2, wherein the gas barrier resin layers (1, 2, 3) comprise a plurality of four-sided bodies (3a) each including two sides extending along a bottle axis (O) and other two sides extending about the bottle axis (O).

6. The laminated bottle (10, 20, 30) of any one of claims 1 to 5, wherein the inner layer (m₁) and the outer layer (m₂) are made of a polyester resin, and the gas barrier resin layers (1, 2, 3) are arranged at least in a shoulder (14) and a trunk (15) of the laminated bottle (10, 20, 30).

## Patentansprüche

1. Laminierte Flasche (10, 20, 30), umfassend eine innere Schicht (m₁), eine äußere Schicht (m₂) und Gasbarriereharzschichten (1, 2, 3), die zwischen der inneren Schicht (m₁) und der äußeren Schicht (m₂) angeordnet sind, wobei
die Gasbarriereharzschichten (1, 2, 3) zueinander, über intermittierende Abschnitte (m₃, m₄), die sich jeweils in Form eines Bands auf eine solche Weise erstrecken, dass die innere Schicht (m₁) und die äußere Schicht (m₂) zueinander in einer Dickenrichtung davon in dem intermittierenden Abschnitt (m₃, m₄) benachbart sind, in einem Abstand angeordnet sind, **dadurch gekennzeichnet, dass**:
eine Breite des intermittierenden Abschnitts (m₃, m₄) in einer Region mit der größten Breite davon 1,5 mm oder mehr entspricht.

2. Laminierte (10, 20, 30) Flasche nach Anspruch 1, wobei die Breite des intermittierenden Abschnitts (m₃, m₄) in der Region mit der größten Breite davon in dem Bereich von 1,5 mm bis 5 mm liegt.

3. Laminierte Flasche (10, 20, 30) nach Anspruch 1 oder 2, wobei die Gasbarriereharzschichten (1, 2, 3) eine Vielzahl streifenförmiger Körper (1a) umfassen, die sich entlang einer Flaschenachse (O) erstrecken.

4. Laminierte Flasche (10, 20, 30) nach Anspruch 1 oder 2, wobei die Gasbarriereharzschichten (1, 2, 3) eine Vielzahl ringförmiger Körper (2a) umfassen, die sich um eine Flaschenachse (O) erstrecken.

5. Laminierte Flasche (10, 20, 30) nach Anspruch 1 oder 2, wobei die Gasbarriereharzschichten (1, 2, 3) eine Vielzahl vierseitiger Körper (3a) umfassen, die jeweils zwei Seiten, die sich entlang einer Flaschenachse (O) erstrecken und zwei andere Seiten einschließen, die sich um die Flaschenachse (O) erstrecken.

6. Laminierte Flasche (10, 20, 30) nach einem der Ansprüche 1 bis 5, wobei die innere Schicht (m₁) und die äußere Schicht (m₂) aus einem Polyesterharz hergestellt werden, und die Gasbarriereharzschichten (1, 2, 3) zumindest in einer Schulter (14) und einem Rumpf (15) der laminierten Flasche (10, 20, 30) angeordnet sind.

## Revendications

1. Bouteille stratifiée (10, 20, 30) comprenant une couche interne (m₁), une couche externe (m₂) et des couches de résine barrière au gaz (1, 2, 3) agencées entre la couche interne (m₁) et la couche externe (m₂),
lesdites couches de résine barrière au gaz (1, 2, 3) étant disposées tout en maintenant un intervalle entre elles à l'aide de parties intermittentes (m₃, m₄) se prolongeant chacune sous la forme de ruban d'une manière telle que la couche interne (m₁) et la couche externe (m₂) sont contiguës l'une à l'autre selon une direction de l'épaisseur de celles-ci dans la partie intermittente (m₃, m₄), **caractérisée en ce que** :
une largeur de la partie intermittente (m₃, m₄) dans une zone de plus grande largeur est de 1,5 mm ou plus.

2. Bouteille stratifiée (10, 20, 30) selon la revendication 1, ladite largeur de la partie intermittente (m₃, m₄) dans la zone de plus grande largeur de celle-ci étant comprise dans la plage allant de 1,5 mm à 5 mm.

3. Bouteille stratifiée (10, 20, 30) selon la revendication 1 ou 2, lesdites couches de résine barrière au gaz (1, 2, 3) comprenant une pluralité de corps en forme de bande (1a) se prolongeant le long d'un axe de bouteille (O).

4. Bouteille stratifiée (10, 20, 30) selon la revendication 1 ou 2, lesdites couches de résine barrière au gaz (1, 2, 3) comprenant une pluralité de corps annulaires (2a) se prolongeant autour d'un axe de bouteille (O).

5. Bouteille stratifiée (10, 20, 30) selon la revendication 1 ou 2, lesdites couches de résine barrière au gaz (1, 2, 3) comprenant une pluralité de corps à quatre côtés (3a) comprenant chacun deux côtés se prolongeant le long d'un axe de bouteille (O) et deux autres côtés se prolongeant autour de l'axe de bouteille (O).

6. Bouteille stratifiée (10, 20, 30) selon l'une quelconque des revendications 1 à 5, ladite couche interne (m₁) et ladite couche externe (m₂) étant constituées d'une résine de polyester et lesdites couches de résine barrière au gaz (1, 2, 3) étant disposées au moins dans une épaule (14) et un tronc (15) de la bouteille stratifiée (10, 20, 30).
